## Europäisches Patentamt

## European Patent Office

## Office européen des brevets

(11) Veröffentlichungsnummer: **0 262 296**
**B1**

(12) **EUROPÄISCHE PATENTSCHRIFT**

(45) Veröffentlichungstag der Patentschrift:
07.03.90

(21) Anmeldenummer: 87107066.0

(22) Anmeldetag: 15.05.87

(51) Int. Cl.⁴: **F16F 13/00**

(54) **Hydraulisch dämpfendes Gummilager.**

(30) Priorität: 26.09.86 DE 3632670

(43) Veröffentlichungstag der Anmeldung:
06.04.88 Patentblatt 88/14

(45) Bekanntmachung des Hinweises auf die Patenterteilung:
07.03.90 Patentblatt 90/10

(84) Benannte Vertragsstaaten:
DE ES FR GB IT SE

(56) Entgegenhaltungen:
EP-A- 0 044 545
EP-A- 0 091 246
EP-A- 0 161 554
EP-A- 0 205 657
DE-A- 3 416 431
DE-B- 2 833 776
GB-A- 2 105 438
US-A- 4 159 091

PATENT ABSTRACTS OF JAPAN, Band 7,
Nr. 165 (M-230)[1310], 20. Juli 1983; &
JP-A-58 72 740 (TOYOTA JIDOSHA KOGYO
K.K.) 30-04-1983

(73) Patentinhaber: **Boge A.G., Bogestrasse 50,
D-5208 Eitorf/Sieg(DE)**

(72) Erfinder: **Reuter, Horst, Ing.grad., Am Sonnenhang 9,
D-5307 Wachtberg-Oberbachem(DE)**
Erfinder: **Quast, Jörn-Rainer, Ing.grad., Am
Kurgarten 64, D-5485 Sinzig-Bad-bodendorf(DE)**
Erfinder: **Meyer, Heinrich, Dipl.-Ing., Am
Limperichsberg 4, D-5330 Königswinter(DE)**
Erfinder: **Brenner, Heinz, Ing.grad, Am Thurmberg 11,
D-5483 Bad Neuenahr-Ahrweiler(DE)**
Erfinder: **Maier, Peter, Gartenstrasse 27,
D-5307 Wachtberg-Fritzdorf(DE)**

ACTORUM AG

## Beschreibung

Die Erfindung bezieht sich auf ein hydraulisch dämpfendes Gummilager, insbesondere Motorlager für Kraftfahrzeuge mit zwei in Axialrichtung einander gegenüberliegenden starren Stirnwänden und wenigstens zwei axial hintereinander angeordneten, Dämpfungsflüssigkeit enthaltenden Kammern, von denen mindestens eine eine als gummielastisches Federelement ausgebildete Umfangswand aufweist, wobei die Kammern durch eine mindestens teilweise elastische, im Ruhezustand geschlossene Durchtrennung(en) für einen Flüssigkeitsaustausch aufweisende Trennwand voneinander getrennt sind.

Derartige Gummilager dienen der Lagerung von Antriebsaggregaten in Fahrzeugen aller Art. Bei der Lagerung von Verbrennungsmotoren in Kraftfahrzeugen ist einerseits zur Vermeidung der Geräuschübertragung eine möglichst weiche Lagerung mit geringer Eigendämpfung erforderlich, die jedoch die von der Fahrbahn angeregten Motorbewegungen sehr groß werden und fast ausschwingen läßt. Andererseits können die großen Motorbewegungen durch harte Lagerungen bzw. separate Schwingungsdämpfer verringert werden, was jedoch wieder zu erheblichen Geräuschübertragungen auf die Karosserie führt.

Gummilager dieser Art sind bekannt (z.B. EP-A 98 331, DE-A 3 225 701, DE-A 3 501 628), bei denen im Bereich der Trennwand ein elastischer Teil vorgesehen ist, wobei in diesem elastischen Bereich Durchtrennungen für einen Flüssigkeitsaustausch zwischen den Kammern vorgesehen sind. Diese Durchtrennungen sind als Schnitt im elastischen Teil hergestellt und geben bei einem bestimmten Druck je nach Druckrichtung einen entsprechenden Öffnungsquerschnitt frei. Die Durchtrennung kann dabei als Dämpfungsquerschnitt selbst oder parallel zu einem Dämpfungskanal als Bypaß vorgesehen werden.

Es sind nachveröffentlichte Motorlager bekannt (z.B. EP-A 205 657), bei denen zwei hintereinander angeordnete Kammern über eine Drosselöffnung miteinander verbunden sind. In einer fest eingespannten Membran sind zusätzliche Durchtrennungen angeordnet, die ein von der Senkrechten abweichendes Profil aufweisen können. Die Oberflächen der Membran sind jedoch im unmittelbaren Bereich der Durchtrennungen parallel verlaufend angeordnet. Eine Änderung der Ansprechempfindlichkeit läßt sich durch eine Verdickung des, der Durchtrennung benachbarten Bereich modifizieren.

Aufgabe der Erfindung ist es, eine Durchtrennung in einer elastischen Membran so auszubilden, daß bei Anströmung der Membran aus verschiedenen Kammern bei gleichem Druck ein unterschiedlicher Druckabbau möglich ist.

Zur Lösung dieser Aufgabe ist erfindungsgemäß vorgesehen, daß die elastische Trennwand bezogen auf die Einspann-Mittelebene in Ruhelage im Querschnitt im Bereich der Durchtrennung(en) derart asymmetrisch ausgebildet ist, daß die gegenüberliegenden Oberflächen der elastischen Trennwand in unmittelbarer Nähe zumindest eines zentralen Bereiches einer Durchtrennung zur Einspann-Mittelebene unterschiedlich beabstandet sind.

Vorteilhaft ist hierbei, daß durch die Geometrie der Membran sowie der Durchtrennungen bei gleichem Druck der aus verschiedenen Kammern wirkt, unterschiedlich große Öffnungsquerschnitte der Durchtrennungen gebildet werden. Eine derartige Durchtrennung kann dabei als Drossel oder als Bypaß parallel zu einem herkömmlichen Drosselkanal vorgesehen werden. Durch die asymmetrische Ausbildung der elastischen Trennwand im Bereich der Durchtrennungen werden in der Zug- und Druckrichtung unterschiedliche Durchströmquerschnitte frei, so daß die Erzielung eines unterschiedlich großen Dämpfungsabfalles möglich ist.

Wird die erfindungsgemäße elastische Membran in einem Bypaß parallel zu einem Dämpfungskanal angewendet, so werden durch die elastische Membran in Druck- und Zugrichtung unterschiedliche Durchströmquerschnitte freigegeben. Dieses bewirkt in beiden Richtungen eine unterschiedlich starke Wirkung des Bypasses. Um die Kavitation, die nur in Zugrichtung auftritt, wirkungsvoll zu begrenzen, müssen genügend große Durchströmquerschnitte freigegeben werden. Dies führt generell zu verringerter Dämpfung, was besonders in Druckrichtung häufig unerwünscht ist.

Die erfindungsgemäße elastische Trennwand erlaubt in vorteilhafter Weise, daß in beiden Richtungen unterschiedliche Durchströmquerschnitte freigegeben werden, so daß die Kavitation wirkungsvoll begrenzt und gleichzeitig die Verringerung der Dämpfung klein gehalten werden kann.

Nach einem weiteren wesentlichen Merkmal ist vorgesehen, daß die Durchtrennung zu einer Oberfläche hin verlaufend abgeschrägt ist.

In Ausgestaltung der Erfindung verlaufen die Oberflächen der elastischen Trennwand parallel zueinander, wobei mindestens eine der Oberflächen im Bereich einer Durchtrennung abgeschrägt, konkav oder konvex verläuft.

Gemäß einer vorteilhaften Ausgestaltung ist vorgesehen, daß mindestens eine Oberfläche über ihren gesamten Bereich sich erstreckend schräg, konisch, kegelig, konkav oder konvex verläuft.

Bevorzugte Ausführungsbeispiele der Erfindung sind in den Zeichnungen näher erläutert.

Es zeigt:

Figur 1 einen axialen Längsschnitt eines Motorlagers mit einer elastischen Trennwand

Figur 2 ein Motorlager mit einer elastischen Trennwand umgeben von einem außenliegenden in einem starren Teil aufgenommenen Dämpfungskanal

Figuren 3 bis 14 verschiedene Ausführungsformen von elastischen Trennwänden.

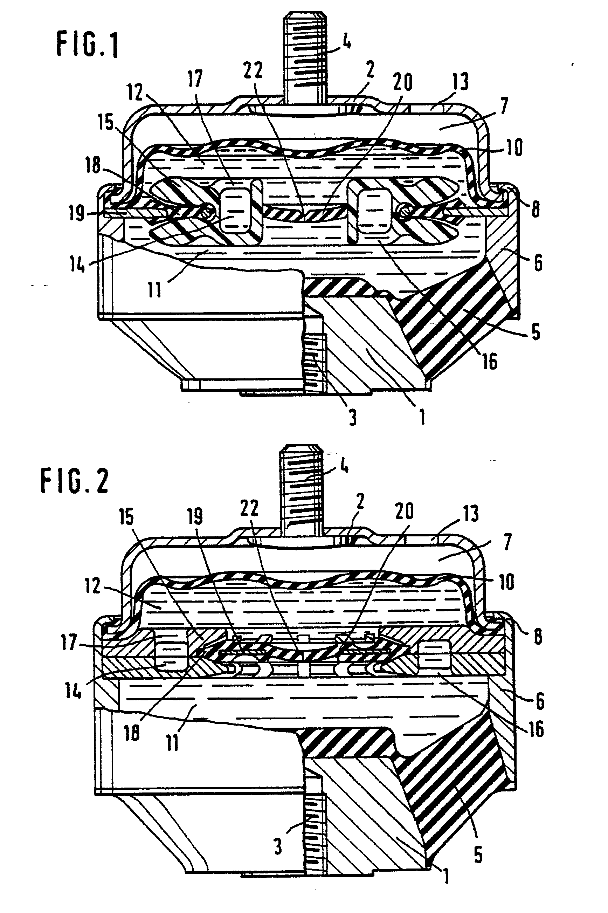

Das in Figur 1 dargestellte Motorlager besitzt zwei in axialer Richtung einander gegenüberliegende Stirnwände 1 und 2. Die Stirnwand 1 ist zu ihrer Befestigung entweder mit einer Gewindebohrung 3 oder mit einem nicht gezeichneten Gewindestift versehen. Entsprechend trägt die als Deckplatte ausgebildete Stirnwand 2 einen Befestigungsstift 4.

An die kegelig ausgebildete Mantelfläche der Stirnwand 1 ist eine als gummielastisches Federelement 5 ausgebildete Umfangswand anvulkanisiert, die in ihrer der Stirnwand 1 abgewandten Anschlußfläche mit einem Verbindungsflansch 6 vereinigt ist. Der Verbindungsflansch 6 umfaßt ferner eine Bördelung 8, die eine Membran 18, einen Faltenbalg 10 und die als Deckplatte ausgebildete Stirnwand 2 aufnimmt. Das Motorlager besitzt somit zwei durch die Membran 18 und die starre Trennwand 15 voneinander getrennte Dämpfungsflüssigkeit enthaltende Kammern 11 und 12, in denen die Kammer 11 als Druckkammer und die Kammer 12 als drucklos volumenaufnehmender Ausgleichsraum ausgebildet ist. In der Stirnwand 2 ist eine Entlüftungsöffnung 13 vorgesehen, die den zwischen der Stirnwand 2 und dem Faltenbalg 10 angeordneten Raum 7 entlüftet.

Die Membran 18 ist derart ausgebildet, daß sie zusammen mit der starren Trennwand 15 während des Lagerbetriebes axiale Bewegungen ausführen kann, wobei die möglichen leichtgängigen Axialbewegungen der Membran 18 den relativ kleinen Amplituden der unter anderem auf das Lager einwirkenden hochfrequenten Geräuschschwingungen entsprechen. Letztere werden somit vom Lager entkoppelt, so daß sich eine gute Geräuschisolation ergibt.

Die starre Trennwand 15 enthält in einer radialen Ebene einen ringförmig um die zentrale Lagerachse verlaufenden Durchtrittskanal 14, welcher die beiden Kammern 11 und 12 miteinander verbindet. Der ringförmige Durchtrittskanal 14 weist eine derartige Länge und Querschnittsfläche auf, daß die Resonanzfrequenz der während des dämpfenden Lagerbetriebes im ringförmigen Durchtrittskanal 14 verschobenen Flüssigkeitsmasse im Zusammenwirken mit den Elastizitäten des gummielastischen Federelementes 5 und der flexiblen Membran 18 im wesentlichen der Resonanzfrequenz des Fahrzeugmotors auf dessen Aufhängung entspricht.

Die an ihrem äußeren Umfang fest eingespannte Membran 18 ist an ihrer Einspannstelle mit der starren Trennwand 15 verbunden. In der starren Trennwand 15 befindet sich der ringförmige Durchtrittskanal 14, wobei die Ein- bzw. Austrittsöffnung 16 und 17 in je eine Stirnfläche der Trennwand 15 mündet. Der äußere Umfang der Membran 18 ist mit einem Einspannring 19 dichtend verbunden. Der Einspannring 19 seinerseits ist zwischen den Kammern 11 und 12 zusammen mit dem Faltenbalg 10 und der Deckplatte 2 in der Bördelung 8 eingespannt.

Im Mittenbereich der starren Trennwand 15 ist die elastische Trennwand 20 vorgesehen, die als Bypaß mindestens eine Durchtrennung 22 aufweist. Die Durchtrennung gibt bei extremem Unterdruck oder bei Druckspitzen in der Druckstufe den Bypaß frei.

Das in Figur 2 dargestellte Lager ist im Prinzip mit dem in Figur 1 vergleichbar, mit dem Unterschied, daß die starre Trennwand 15 im radial äußeren Bereich des Lagers fest und axial unbeweglich aufgenommen ist. Die starre Trennwand 15 besitzt dabei ebenfalls einen ringförmigen Durchtrittskanal 14. Im mittleren Bereich der starren Trennwand 15 ist die elastische Trennwand 20 angeordnet, wobei die Durchtrennungen 22 je nach Druck parallel zum Durchtrittskanal 14 einen Druckabfall bewirken.

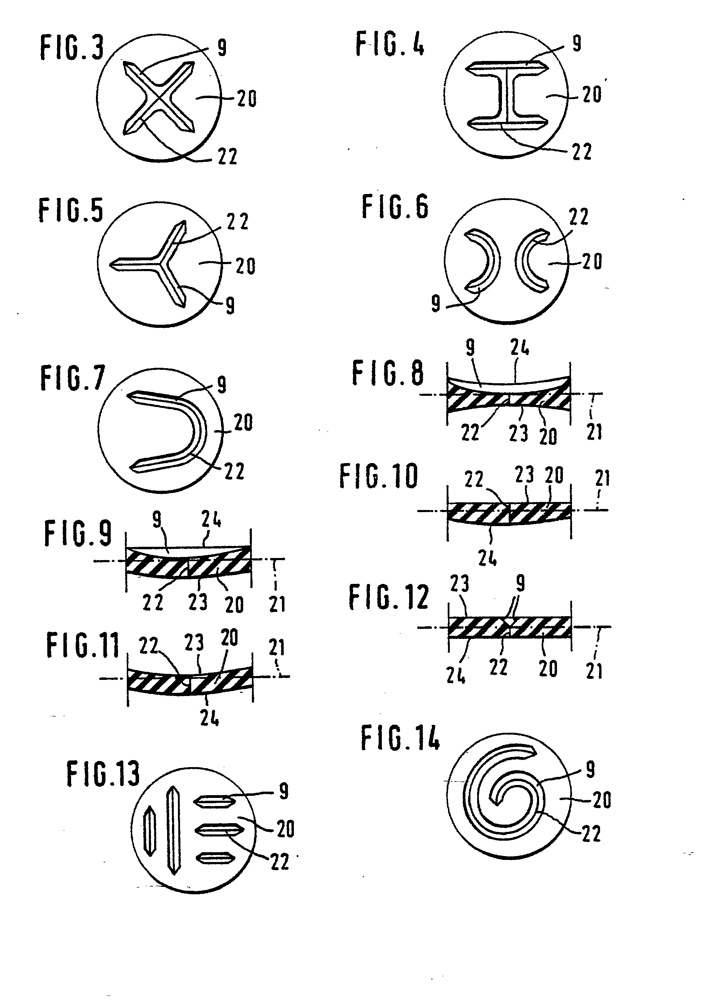

Einzelne Ausführungsformen der elastischen Trennwand 20 sind in den Figuren 3 bis 7 dargestellt. Dabei handelt es sich in Figur 3 um eine Durchtrennung 22, die in Form eines kreuzförmig angeordneten Schnittes erzeugt wurde. Die Durchtrennung 22 der Figur 4 besitzt einen H-förmig ausgebildeten Schnitt. In Figur 5 verläuft die Durchtrennung 22 in drei sternförmig zur Mitte gerichteten Schnitten, wobei Figur 6 zwei halbkreisförmige und Figur 7 einen halbkreisförmig oder bogenförmig verlaufenden Schnitt vorsieht. Alle diese in den Figuren 3 bis 7 gezeigten Durchtrennungen 22 wirken als gemeinsames Ventil sowohl in der Druck- wie auch in der Zugstufe. Durch die abgeschrägten Bereiche 9 erhält die elastische Trennwand 20 eine asymetrische Form, so daß die gegenüberliegenden Oberflächen 23 und 24, wie die Figuren 8 und 9 zeigen, einen unterschiedlich großen Abstand zur Mittelebene 21 erhalten. Diese Formgestaltung gestattet, daß bei gleichem Druck auf die verschiedenen Oberflächen 23 bzw. 24 jeweils ein unterschiedlicher öffnungsquerschnitt der Durchtrennung 22 erzeugt werden kann.

In den Figuren 10 bis 12 sind unterschiedliche Oberflächenformen der elastischen Trennwand 20 dargestellt. Figur 10 zeigt eine zur Mittelebene 21 parallele Oberfläche 23, während die Oberfläche 24 konvex ausgebildet ist. In Figur 11 ist die Oberfläche 23 konkav und die Oberfläche 24 konvex ausgebildet. Die Figur 12 zeigt parallele Oberflächen 23 und 24, wobei die Durchtrennung 22 abgeschrägte Bereiche 9 aufweist. Alle elastischen Trennwände 22 haben gemeinsam, daß bei Druck auf die zur Mittelebene 21 nähere Oberfläche ein größerer öffnungsquerschnitt auf der der zur Mittelebene 21 weiter entfernten Oberfläche entsteht. Bei Druck auf der entgegengesetzten Fläche verhält sich die elastische Trennwand 20 entsprechend umgekehrt.

Die Figuren 13 und 14 zeigen weitere Varianten, wobei in der Figur 13 mehrere Durchtrennungen 22 vorgesehen sind und bei der Figur 14 eine spiralförmig verlaufende Durchtrennung, die alle mit abgeschrägten Bereichen 9 versehen sind.

**Patentansprüche**

1. Hydraulisch dämpfendes Gummilager, insbesondere Motorlager für Kraftfahrzeuge mit zwei in Axialrichtung einander gegenüberliegenden starren Stirnwänden (1, 2) und wenigstens zwei axial hintereinander angeordneten, Dämpfungsflüssigkeit enthaltenden Kammern (11, 12), von denen mindestens eine eine als gummielastisches Federelement ausgebildete Umfangswand (5) aufweist, wobei die Kammern (11, 12) durch eine mindestens teilweise elastische, im Ruhezustand geschlossene, Durchtrennung(en) (22) für einen Flüssigkeitsaustausch aufweisende Trennwand (20) voneinander getrennt sind, dadurch gekennzeichnet, daß die elastische Trennwand (20) bezogen auf die Einspann-Mittelebene (21) in Ruhelage im Querschnitt im Bereich der Durchtrennung(en) (22) derart asymmetrisch ausgebildet ist, daß die gegenüberliegenden Oberflächen (23, 24) der elastischen Trennwand (20) in unmittelbarer Nähe zumindest eines zentralen Bereiches einer Druchtrennung (22) zur Einspann-Mittelebene (21) unterschiedlich beabstandet sind.

2. Gummilager nach Anspruch 1, dadurch gekennzeichnet, daß die Durchtrennung (22) zu einer Oberfläche (23, 24) hin verlaufend abgeschrägt ist.

3. Gummilager nach Anspruch 1, dadurch gekennzeichnet, daß die Oberflächen (23, 24) der elastischen Trennwand (20) parallel zueinander verlaufen, wobei mindestens eine der Oberflächen (23, 24) im Bereich einer Durchtrennung (22) abgeschrägt, konkav oder konvex verläuft.

4. Gummilager nach Anspruch 1, dadurch gekennzeichnet, daß mindestens eine Oberfläche (23, 24) über ihren gesamten Bereich sich erstreckend schräg, konisch, kegelig, konkav oder konvex verläuft.

## Revendications

1. Support en caoutchouc à amortissement hydraulique, en particulier, support de moteur pour véhicules automobiles, comprenant deux parois frontales rigides (1, 2) qui sont opposée l'une à l'autre dans la direction axiale et au moins deux chambres (11, 12) contenant un liquide d'amortissement, disposées axialement l'une à la suite de l'autre, dont au moins une présente une paroi périphérique (5) constituant un élément élastique possédant l'élasticité du caoutchouc, les chambres (11, 12) étant séparées l'une de l'autre par une cloison (20), au moins partiellement élastique, fermée dans l'état de repos, et qui présente des passages traversants (2) servant à permettre l'échange du liquide, caractérisé en ce que la cloison élastique (20) est d'une configuration asymétrique, rapportée au plan médian d'encastrement (21) dans l'état de repos dans la région du passage traversant (22), de telle manière que les surfaces opposées (23, 24) de la cloison élastique (20) soit placées à des distances différentes du plan médian d'encastrement (21) dans le voisinage immédiat d'au moins une région centrale d'un passage traversant (22).

2. Support en caoutchouc selon la revendication 1, caractérisé en ce que le passage traversant (22) est chanfreiné dans le sens qui se dirige vers l'une des surfacs (23, 24).

3. Support en caoutchouc selon la revendication 1, caractérisé en ce que les surfaces (23, 24) de la cloison élastique (20) s'étendent parallèlement entre elles, au moins une des surfaces (23, 24) étant inclinée, concave ou convexe, dans la région d'une fente traversante (22).

4. Support en caoutchouc selon la revendication 1, caractérisé en ce qu'au moins une surface (23, 24) s'étend avec une forme inclinée, conique, concave ou convexe, sur toute sa superficie.

## Claims

1. Hydraulically damped rubber mounting, in particular an engine mounting for motor vehicles with two rigid walls (1, 2) facing one another in a axial direction and at least two chambers (11, 12) containing damping fluid and arranged axially one behind the other of which at least one has a boundary wall (5) formed as a rubber elastic spring element, the chambers (11, 12) being separated from one another by an at least partially elastic dividing wall (20) having an opening or openings (22) for an exchange of fluid, closed in the rest condition, characterised in that, the elastic dividing wall (20) is made asymmetric in cross-section in relation to the central clamping plane (21) in the rest condition in the region of the opening or openings (22) in such a way that the opposed surfaces (23, 24) of the elastic dividing wall (20) in the immediate neighbourhood at least of a central region of an opening (22) are differently spaced away with respect to the central clamping plane (21).

2. Rubber mounting according to claim 1, characterised in that the opening (22) extends inclined or chamfered towards a surface (23, 24).

3. Rubber mounting according to claim 1, characterised in that, the surfaces (23, 24) of the elastic dividing wall (20) extend parallel to one another, at least one of the surfaces (23, 24) extending chamfered, concavely or convexly in the region of an opening (22).

4. Rubber mounting according to claim 1, characterised in that, at least one surface (23, 24) extends over its whole range extending inclined, conically, frusto-conically, concavely or convexly.

EP 0 262 296 B1

FIG.1

FIG.2

EP 0 262 296 B1

FIG.3

FIG.4

FIG.5

FIG.6

FIG.7

FIG.8

FIG.9

FIG.10

FIG.11

FIG.12

FIG.13

FIG.14